# EUROPÄISCHE PATENTSCHRIFT

(11) **EP 1 250 038 B1**
(45) Veröffentlichungstag und Bekanntmachung des Hinweises auf die Patenterteilung: **08.09.2004**
(21) Anmeldenummer: 01907352.7
(22) Anmeldetag: 10.01.2001
(51) Int. Cl.: A01J 5/007

(54) **VERFAHREN ZUM MASCHINELLEN MELKEN VON TIEREN**
METHOD FOR THE MECHANICAL MILKING OF ANIMALS
PROCEDE DE TRAITE MECANIQUE D'ANIMAUX

(30) Priorität: 10.01.2000 DE 10002882
(43) Veröffentlichungstag der Anmeldung: 23.10.2002
(73) Patentinhaber: IMPULSA AG, 04910 Elsterwerda (DE)
(72) Erfinder: FREIGANG, Rainer, 04934 Hohenleipisch (DE); RUDOVSKY, Hans-Jürgen, 04349 Leipzig (DE)
(74) Vertreter: Schubert, Klemens, Dr.
(86) Internationale Anmeldenummer: PCT/DE2001/000128
(87) Internationale Veröffentlichungsnummer: WO 2001/050842

(56) Entgegenhaltungen:
- DD-A- 211 920
- DE-A- 3 047 579
- DE-B- 3 001 963

## Beschreibung

Die Erfindung betrifft ein Verfahren zum maschinellen Melken von Tieren, bei dem der Milchentzug nach dem Prinzip des Saugmelkverfahrens erfolgt.

Es ist bekannt, dass tiergerechte Melkroutinen für Vorrichtungen zum maschinellen Melken mit dem Ziel einer vollen Ausschöpfung des genetischen Leistungspotentials an das physiologische Melkverhalten der Tiere angeglichen werden müssen. Insbesondere gilt es dabei eine optimale Vorbereitung der Tiere auf den Milchentzugsprozess zu gewährleisten. Daher wird bei maschinellen Melkverfahren, welche diese Prämissen berücksichtigen, der eigentlichen Melkphase eine so genannte Stimulationsphase vorangestellt. Diese ist erforderlich, um die Melkbereitschaft der Tiere herzustellen.
Bei Milchkühen ist für die Stimulationsphase anerkanntermaßen eine Dauer von ca. 60 Sekunden vorzusehen. Innerhalb dieser Zeitspanne wird durch Berührung, Massage oder andere taktile Reize auf das Euter die Melkbereitschaft hergestellt. Durch diese Reize werden von den hochempfindlichen Nervenenden am Euter über die Nervenbahnen und das Rückenmark Signale an das Hirn geliefert, welche eine verstärkte Ausschüttung des Hormons Oxytocin aus der Hirnanhangsdrüse in die Blutbahn auslösen. Das Hormon bewirkt ein Zusammenziehen von Muskelfasern, welche die in großer Zahl im Euter vorhandenen Milchbläschen (Alveolen) umgeben. Dadurch wird die Milch aus den Alveolen in die so genannte Zisterne des Euters überführt, aus welcher sie dann ermolken werden kann. Es kommt zu einem so genannten Einschießen der Milch. Das Euter wird hierdurch spürbar prall, so dass im Ergebnis die Melkbereitschaft erreicht wird.
Durch die vor dem Melken genommene Vormelkprobe und die je nach Verschmutzungsgrad des Euters unterschiedlich lange Reinigungsdauer sowie durch das Anlegen des Melkzeuges werden bereits die ersten stimulierend wirkenden Reize ausgeübt. Da jedoch, wie dargestellt, insbesondere Rinder zur Herstellung der Melkbereitschaft eine längere Stimulationsphase benötigen, macht es sich erforderlich, zu Beginn des maschinellen Melkvorganges weiterhin stimulierend auf das Euter einzuwirken.

Beim Einsatz von so genannten Zweiraum-Melkbechern wird eine Kammer, welche den im Innern des Melkbechers befindlichen Zitzengummi umgibt, mit dem wechselnden Unterdruck der Saugmelkleitung beaufschlagt. Hierdurch pulsiert der Zitzengummi entsprechend den sich jeweils einstellenden Unterdruckverhältnissen.
Aus der DD 211 920 ist ein Verfahren zum maschinellen Melken bekannt, welches vorsieht, dass zu Beginn des Melkvorganges, also während einer vorangehenden Stimulationsphase, eine Pulsation mit einer gegenüber der späteren Hauptmelkphase deutlich erhöhten Taktzahl erfolgt. Zudem wird vorgeschlagen, die Taktzahl sowohl während der Stimulationsphase als auch während der Hauptmelkphase zu variieren. Gemäß dem in der Schrift dargestellten Verfahrensregime wird dabei bereits während der Stimulationsphase im nennenswerten Maße Milch entzogen. Dies hat sich in der Praxis teilweise insoweit als nachteilig erwiesen, als der Milchentzug während der Stimulationsphase dazu führen kann, dass die Zisterne schon vor dem Übergang in die Hauptmelkphase, gekennzeichnet durch das Einschießen der Alveolarmilch, vollständig entleert ist. Hierdurch kommt es zu Beginn der Hauptmelkphase zu einem als Bimodalität bezeichneten Abknicken der Milchflusskurve. Damit einher geht ein ebenfalls als nachteilig angesehenes "Klettern" des Melkbechers an der Zitze. Eine solche Bimodalität kann insbesondere auftreten, wenn aufgrund eines sauberen Euters eine zusätzliche Reinigung unterbleibt, folglich weniger stimulierende Reize gesetzt werden und dadurch bei Beginn der maschinellen Stimulation mit vollem Milchentzug bereits mehr Milch entzogen wird als aufgrund der bis dahin erreichten Melkbereitschaft aus den Alveolen in die Zisterne überführt wird.
In der DE 30 01 963 wird daher ein Verfahren zum Milchentzug vorgeschlagen, bei dem während einer Zeitspanne von 40 bis 60 Sekunden ab dem Beginn der Stimulation durch das Setzen erster taktiler Reize keine Milch entzogen wird. Dieser grundsätzlichen Überlegung folgt außerdem ein in der DE 30 47 579 vorgeschlagenes Verfahren, welches eine Lösung zur Einstellung durch eine Formel vorgegebener Druckverhältnisse in den Melkbechern betrifft. Das der Schrift zugrunde liegende Verfahren ist so ausgestaltet, dass der Zitzengummi des Melkbechers während der Stimulation quasi flattert, jedoch stets soweit geschlossen ist, dass ein Milchentzug trotz der Pulsation des Unterdrucks im Innenraum und der damit einher gehenden zyklischen Saugwirkung an der Zitze nicht erfolgt.

Während die Notwendigkeit einer Stimulationsphase sowie deren günstige Dauer von ca. 60 Sekunden bei Milchkühen im Hinblick auf ein günstiges Melkergebnis unumstritten ist, bestehen zur Frage des Milchentzuges während der Stimulationsphase unterschiedliche Auffassungen. Dabei liegt der vorliegenden Erfindung die Auffassung zu Grunde, dass ein vollständiges Verhindern des Milchentzuges der durch die taktilen Reize verursachten Stimulationswirkung in nachteiliger Weise entgegenwirkt.
Aufgabe der Erfindung ist es daher, ein Verfahren anzugeben, welches eine optimale Stimulation der zu melkenden Tiere ermöglicht und gleichzeitig das Abknicken der Milchkurve zu Beginn der Hauptmelkphase und das damit verbundene Klettern des Melkbechers an der Zitze verhindert.

Diese Aufgabe wird durch eine Verfahren mit den Merkmalen des Hauptanspruchs gelöst. Vorteilhafte Ausgestaltungen bzw. Weiterbildungen des erfindungsgemäßen Verfahrens sind durch die Unteransprüche gegeben.
Der Milchentzug erfolgt nach dem Verfahren in an sich bekannter Weise dadurch, dass an den Zitzen des zu melkenden Tieres, gesteuert von einem jeweils eine Saugphase und eine Entlastungsphase umfassenden Takt, im Wechsel ein maximaler Unterdruck während der Saugphase und ein minimaler Unterdruck während der Entlastungsphase zur Wirkung gelangt. Beim Einsatz von Zweiraum-Melkbechern steht zwar üblicherweise am Melkbecherinnenraum ständig der volle Unterdruck (bei Milchkühen vorzugsweise 42 kPa) an, jedoch greift dieser, durch das wechselnde Einfalten und Öffnen der Zitzengummis infolge des zwischen dem maximalen Unterdruck und dem Umgebungsdruck wechselnden Druckes im Melkbecherzwischenraum, in seiner Wirkung auf die Zitze unterschiedlich stark durch. In erfindungswesentlicher Weise erfolgt ein Milchentzug nicht nur während der Hauptmelkphase und einer sich daran anschließenden Ausmelkphase, sondern auch, allerdings in stark reduzierter Höhe, während einer der Hauptmelkphase vorangehenden, der Stimulation dienenden Phase. Während der überwiegenden Dauer dieser Stimulationsphase wird dabei erfindungsgemäß die Zahl der Takte pro Minute durchgängig oder periodisch mindestens auf das Doppelte einer während der Hauptmelkphase und/oder der Ausmelkphase wirkenden Normaltaktzahl erhöht und die Dauer der Saugphase innerhalb eines Taktes auf höchstens ein Drittel der Gesamtdauer des Taktes begrenzt. Die Forderung, nach welcher die Taktzahl während der überwiegenden Dauer der Stimulationsphase durchgängig oder periodisch erhöht wird, umfasst dabei die Möglichkeit, auch während der Stimulationsphase kurze Zeitintervalle mit einer gegenüber der Hauptmelkphase nicht erhöhten Taktzahl vorzusehen, wobei aber über einen längeren Zeitraum hinweg bzw. während der überwiegenden Dauer der Stimulationsphase (bei Rindern vorzugsweise während einer Dauer von mindestens 30 bis 45 Sekunden der idealer Weise insgesamt etwa 60 Sekunden dauernden Stimulationsphase) die Phasen erhöhter Taktzahl überwiegen bzw. in der Summe länger sind. Gleiches gilt in Bezug auf das Verhältnis der Dauer von Saug- und Entlastungsphase bzw. Saugphase und Gesamttaktzeit. Das vorgegebene Verfahrensregime kann als Programmablauf in einer elektronischen, den Melkablauf bestimmenden und überwachenden Steuerung hinterlegt werden.
Die grundsätzliche Überlegung der vorgeschlagenen Lösung beruht darauf, auch während der Stimulationsphase einen Milchentzug zuzulassen. Allerdings wird während der Stimulation Milch nur in sehr geringem Umfang entzogen. Damit soll ein während der Stimulationsphase möglicher Rückfluss erregerbelasteter Milch aus der Zitzenzisteme in die Euterzisteme verhindert werden. Die Infektionsgefahr kann dadurch verringert werden. Dies wird dadurch erreicht, dass die Saugphase gegenüber der Entlastungsphase stark verkürzt ist. Die Stimulation selbst erfolgt somit durch die infolge der Pulsation hervorgerufenen taktilen Reize und den gleichzeitig in geringem Maße erfolgenden Milchentzug.
Beim Einsatz von Zweiraum-Melkbechem mit Zitzengummis wird, der erfindungsgemäßen Idee folgend, der Öffnungsgrad der Zitzengummis durch das getaktete Steuern der Unterdruckverhältnisse auch während der Stimulationsphase zwischen einem den Milchentzug verhindernden eingefalteten Zustand und einem den Milchentzug ermöglichenden geöffneten Zustand variiert. Der Zitzengummi flattert somit nicht lediglich im Bereich eines geringen Öffnungsgrades, öffnet aber aufgrund der Kürze der Saugphase dennoch nicht vollständig.
Entsprechend einer besonders vorteilhaften Weiterbildung des erfindungsgemäßen Verfahrens wird während einer begrenzten Zeitspanne innerhalb der Hauptmelkphase die Taktzahl ebenfalls zyklisch gegenüber der in der Hauptmelkphase bzw. der Ausmelkphase wirkenden Normaltaktzahl erhöht. Dabei wird diese Zeitspanne durch einen minimalen vorgegebenen Milchfluss und/oder eine maximale Dauer begrenzt. Die Ratio entspricht unterdessen in dieser Zeitspanne derjenigen, die in der Hauptmelkphase bzw. der Ausmelkphase üblich ist (bei Milchkühen ca. 60 : 40). In der Praxis wird die Dauer der Zeitspanne, während der bei Zulassung des vollen Milchflusses weiterhin noch in gewissem Maße stimulierend auf das Euter eingewirkt wird, vorzugsweise durch den ständig erfassten Milchfluss bestimmt. Sinkt dieser unter einen vorgegebenen Wert wird auf eine gleichbleibende Normaltaktzahl umgeschaltet. Im Hinblick auf die Gesamtmelkdauer und den Übergang von der Hauptmelkphase auf eine Ausmelkphase, bei der zusätzlich zyklisch eine senkrecht zum Euterboden wirkende Zugkraft auf das Euter ausgeübt wird, wird die Zeitspanne der vermindernd fortgeführten, melkbegleitenden Stimulation aber gleichzeitig auf eine maximale Dauer begrenzt. Diese beträgt bei Milchkühen gemäß der vorgeschlagenen Lösung 180 s. Es wird hierbei auch erkennbar, dass die Übergänge zwischen den einzelnen Phasen teilweise mehr oder weniger fließend sind. So kann es je nach dem Melkverhalten eines Tieres auch sein, dass im Grunde die gesamte Hauptmelkphase durch die vorstehend erläuterte Variation der Taktzahl für eine fortgesetzte Stimulation begleitet ist. Daher wird die ständige oder periodische Erhöhung der Taktzahl während der eigentlichen Stimulationsphase (von ca. 60 s bei Milchkühen) gemäß der Formulierung des Hauptanspruchs auf die Normaltaktzahl während der Haupt- oder der Ausmelkphase bezogen. In Bezug auf Milchkühe beträgt diese Normaltaktzahl 60 bis 70 Takte pro Minute.
Gemäß einer Ausgestaltung des erfindungsgemäßen Verfahrens ist die Zahl der Takte pro Minute in einem 30 bis 45 Sekunden andauernden Zeitabschnitt vor dem Übergang von der Stimulations- zur Hauptmelkphase zum überwiegenden Teil drei- bis fünfmal so hoch wie in der Hauptmelkphase bzw. der Ausmelkphase.
Eine mögliche Ausgestaltung, welche sich insbesondere bei der Anwendung auf Milchkühe als günstig erwiesen hat, ist darin zu sehen, dass die Taktzahl in der Stimulationsphase zum überwiegenden Teil 180 bis 350 Takte pro Minute, während sie in der Hauptmelkphase bzw. der Ausmelkphase, wie bereits erläutert, in an sich bekannter Weise 60 bis 70 Takte pro Minute beträgt. Das zeitliche Verhältnis zwischen der Saugphase und der Entlastungsphase (die so genannte Ratio) beträgt entsprechend einer möglichen Ausgestaltung des Verfahrens während der überwiegenden Dauer der Stimulationsphase zwischen 20 : 80 und 30 : 70.

Besonders vorteilhaft ist das erfindungsgemäße Verfahren dann ausgestaltet, wenn der Übergang zwischen der Stimulationsphase und der Hauptmelkphase sowie die damit verbundene Verringerung der Taktzahl und die Veränderung des Taktverhältnisses bzw. der Ratio allmählich, innerhalb einer Zeitspanne von 2 bis 4 Sekunden, erfolgen. Im Sinne des erfindungsgemäßen Verfahrens ist es auch, die Taktzahl und/oder die Ratio (das Taktverhältnis) zwischen Saug- und Entlastungsphase, während der Stimulationsphase, innerhalb der für sie im Verhältnis zur Hauptmelkphase angegebenen Bereiche zu variieren. Durch eine gegebenenfalls erfolgende zyklische Veränderung der Taktzahl wird die stimulierende Wirkung bei der Wahl eines solchen Verfahrensregimes zusätzlich unterstützt, da hierdurch eine Gewöhnung an die stimulierenden Reize vermieden und in Folge dessen eine oftmals noch stärkere Ausscheidung des Hormons Oxytocin erreicht wird.
Eine besonders vorteilhafte Weiterbildung des Verfahrens ist darin zu sehen, dass man zur Festlegung der Parameter für den Stimulationsvorgang tierspezifische, das Melkverhalten des einzelnen Tieres beschreibende, physiologische Parameter berücksichtigt. Unter Einbeziehung einer Einheit zur Tiererkennung ist es dabei möglich, die Taktzahl und die Ratio oder die Variationsbereiche dieser Größen auf der Grundlage von Parametern festzulegen, welche zu dem erkannten Tier in einer Datenbank hinterlegt sind.
Eine weitere mögliche und ebenfalls als vorteilhaft einzuschätzende Ausgestaltung des Verfahrens sieht vor, innerhalb einer kurzen Zeitspanne zu Beginn der Stimulationsphase mit Taktzahlen und einer Ratio zu arbeiten, welche den Verhältnissen in der Hauptmelkphase entsprechen. Dies dient vorzugsweise dazu, zunächst ein sicheres Anhaften des Melkzeugs am Euter zu gewährleisten. In jedem Falle schließt sich aber an diese kurze Zeitspanne eine deutlich längere Zeitspanne an, innerhalb welcher die Stimulation nach den vorstehend erläuterten Bedingungen erfolgt, so dass auch diese Verfahrensvariante der Forderung Rechnung trägt, die Taktzahl und die Ratio entsprechend der grundsätzlichen Überlegung während der überwiegenden Dauer der Stimulationsphase durchgängig oder periodisch gegenüber den Gegebenheiten bei der Hauptmelkphase zu verändern.

Nachfolgend soll das erfindungsgemäße Verfahren anhand zweier möglicher Ausführungsbeispiele nochmals näher erläutert werden. Eine mögliche Ablaufsteuerung für den Einsatz zum maschinellen Melken von Milchkühen ist dabei gemäß einer ersten Variante folgendermaßen gestaltet:
1. 10 Sekunden 60 bis 70 Takte, Ratio 60 : 40,
2. 3 Sekunden 200 Takte, Ratio 20 : 80,
3. 3 Sekunden 260 Takte, Ratio 20 : 80,
4. 3 Sekunden 200 Takte, Ratio 20 : 80,
5. 3 Sekunden 260 Takte, Ratio 20 : 80,
6. 3 Sekunden 200 Takte, Ratio 20 : 80,
7. Zweimaliges Wiederholen der Punkte 2 bis 6 (Dauer Punkte 2 bis 7 insgesamt 45 s),
8. Allmählicher Übergang zur Hauptmelkphase durch Absenken der Taktzahl auf schrittweise 150, 120, 100, 60 Takte innerhalb von 2 bis 4 Sekunden,
9. Hauptmelkphase mit melkbegleitender Stimulation für maximal 180 Sekunden.

Nach dem Starten des Melkprogramms wird also zunächst für ca. 10 Sekunden mit 60 bis 70 Takten pro Minute gemolken, wobei das Verhältnis der Zeitdauer zwischen Saug- und Entlastungsphase dem der Hauptmelkphase entspricht und demnach ca. 60 : 40 beträgt. Diese kurze Zeitspanne dient vornehmlich dem sicheren Ansetzen bzw. Anhaften des Melkzeugs. Dabei ermolkene Milch wird zunächst (etwa innerhalb der ersten 7 s) zur Vermeidung von Fehlmessungen nicht eingezählt. Hieran schließt sich eine 45 Sekunden dauernde Phase an, in der die Ratio 20 : 80 beträgt. Innerhalb dieser 45 sekündigen Phase wird die Taktzahl jeweils aller drei Sekunden zwischen 200 und 260 variiert. Durch diese Variation der Taktzahl wird ein starker stimulierender Reiz ausgeübt, und es kommt zu einer verstärkten Überführung von Milch aus den Alveolen in die Zisterne. In der Saugphase beträgt der Unterdruck in den Melkbecherzwischenräumen typischerweise bis zu 42 kPa, während in der Entlastungsphase Umgebungsdruck, also atmosphärischer Druck in den Melkbecherzwischenräumen herrscht. Der permanent an die Innenräume der Melkbecher geführte maximale Unterdruck kommt dadurch an den Zitzen wechselnd unterschiedlich stark zur Wirkung. Der ständige Wechsel der Taktzahl zwischen 200 und 260 Takten pro Minute unterstützt die stimulierende Wirkung durch das Erreichen individueller Reizoptima in besonders günstiger Weise. Durch die gewählte Ratio von 20 : 80 variiert zwar der Öffnungsgrad der Zitzengummis zwischen einem eingefalteten Zustand und einem annähernd geöffneten Zustand, jedoch kommt es zu keiner vollständigen Öffnung des Zitzengummis. Dadurch und durch die Kürze der Saugphase selbst wird zwar während der vorrangig durch die Pulsation des Zitzengummis bewirkten Stimulation eine gewisse Menge Milch entzogen, jedoch ist diese Menge so gering, dass sichergestellt wird, dass die Zisterne nicht entleert wird. Dies lässt sich anhand der vorstehend genannten Zahlenwerte für die Taktzahl und das Taktverhältnis einfach verdeutlichen. Bei einer Taktzahl von 260 Takten pro Minute beträgt die Dauer eines Taktes ca. 230 ms. Von diesen 230 ms verbleibt bei einer Ratio von 20 : 80 lediglich eine Zeitspanne von ca. 46 ms für die Saugphase. Diese Zeit reicht nicht aus, um den Zitzengummi vollständig zu öffnen. Jedoch fuhren die Druckverhältnisse zu einem Öffnungsgrad des Zitzengummis, der einen geringfügigen Milchentzug zulässt. Nach der ca. 60 Sekunden andauernden Stimulationsphase werden dann die Taktzahl und die Ratio zwischen Saug- und Entlastungsphase innerhalb einer Zeitspanne von ca. 2 bis 4 Sekunden auf die in der Hauptmelkphase üblichen Werte von 60 bis 70 Takten bzw. einer Ratio von 60 : 40 überführt, wobei die Taktzahl gemäß dem vorgestellten Beispiel im Sinne einer weiteren melkbegleitenden Stimulation für eine maximale Zeitspanne von 180 Sekunden weiterhin periodisch, vorzugsweise zwischen 60/70 und 200 Takten variiert wird.

Bei einem grundsätzlich in vergleichbarer Weise ablaufenden Verfahren sind die einzelnen Phasen des vorstehend geschilderten Ablaufs in ihrer konkreten Ausgestaltung in Bezug auf Taktzahl und Ratio etwas modifiziert. Hiernach gestaltet sich bis zum Beginn der Hauptmelkphase folgender Ablauf:
1. 7 Sekunden Normalpulsation (60 bis 70 Takte pro Minute) ohne Einzählung gegebenenfalls dabei ermolkener Milch
2. weitere 3 bis 8 Sekunden Normalpulsation mit Einzählung der Milch
3. 30 bis 45 Sekunden mit periodischer, stimulierend wirkender Erhöhung der Taktzahl, im Wechsel 200 Takte pro Minute (Ratio 20 : 80) für 10 Sekunden und 60 Takte für 5 Sekunden.
4. Übergang zur Hauptmelkphase
Während der zu Beginn der Stimulationsphase vorgesehenen Zeitdauer von ca. 10 Sekunden, wird zunächst mit zur Hauptmelkphase vergleichbaren Einstellungen gemolken. erfolgt in den ersten 7 Sekunden keine, beispielsweise durch die Auswertung von Kippungen einer Kippschale realisierte Einzählung der ermolkenen Milch.
Erst die in den anschließenden 3 bis 8 Sekunden entzogene Milch wird dem Gesamtmelkergebnis zugerechnet. Innerhalb der sich anschließenden, die eigentliche Stimulation bewirkenden Phase von 30 bis 45 Sekunden werden die Taktzahl und die Ratio zwischen Saug- und Entlastungsphase mehrfach verändert. Hierzu ist diese Phase nochmals in mehrere je 15 sekündige Zeitabschnitte unterteilt. Innerhalb jedes dieser Zeitabschnitte wird dabei zunächst für 10 Sekunden mit einer Taktzahl von 200 Takten pro Minute und einer Ratio von 20 : 80 gemolken, während anschließend das Melken für 5 Sekunden mit einer Taktzahl von 60 Takten pro Minute erfolgt und die Ratio in dieser Zeitspanne ebenfalls 20 : 80 oder wie bei der Hauptmelkphase 60 : 40 betragen kann.

Das dargestellte Verfahren ist sowohl beim Gleichtaktmelken, bei dem alle Euterviertel in gleicher Phasenlage jeweils mit dem der Saugphase und dem der Entlastungsphase entsprechendem Druck bzw. Unterdruck beaufschlagt werden, als auch beim Wechseltaktmelken, bei dem der Wechsel zwischen Saug- und Entlastungsphase jeweils an den einander diagonal gegenüberliegenden Eutervierteln synchron erfolgt, anwendbar.

Das vorgestellte Verfahren führt durch eine gute Stimulation zu einer hohen Melkbereitschaft der Tiere und somit zu einer über den gesamten Melkvorgang günstig verlaufenden Milchflusskurve sowie hohen Milcherträgen. Dabei wirkt ein zyklischer Wechsel der Taktzahlen insbesondere auch in der Stimulationsphase einer Gewöhnung der Tiere an die einwirkenden Reize entgegen. Durch das Zulassen eines geringen Milchentzugs auch während der Stimulationsphase wird eine insgesamt kurze Melkzeit erreicht. Gleichzeitig werden eine zu starke Euterbelastung durch Verhinderung zu hoher Euterinnendrücke sowie ein Zurückfließen eventuell erregerbehafteter Milch aus der Zitzenzisteme in die Euterzisteme vermieden. Dadurch ist ein Sinken der Zahl von Eutererkrankungen zu erwarten. Nicht zuletzt wirkt sich sicherlich das Vermeiden teilweise schmerzhafter Belastungen des Euters wiederum positiv auf das Melkverhalten der Milchkühe aus.

## Patentansprüche

1. Verfahren zum maschinellen Melken von Tieren, bei dem der Milchentzug während einer Stimulationsphase, einer sich daran anschließenden Hauptmelkphase und einer Ausmelkphase erfolgt, indem an den Zitzen eines zu melkenden Tieres, gesteuert von einem jeweils eine Saugphase und eine Entlastungsphase umfassenden Takt, im Wechsel ein maximaler Unterdruck während der Saugphase und ein minimaler Unterdruck während der Entlastungsphase wirkt, wobei während der überwiegenden Dauer der Stimulationsphase die Zahl der Takte pro Minute durchgängig oder periodisch mindestens auf das Doppelte einer während der Hauptmelkphase und/oder der Ausmelkphase wirkenden Normaltaktzahl erhöht und die Dauer der Saugphase innerhalb eines Taktes auf höchstens ein Drittel der Gesamtdauer des Taktes begrenzt wird.

2. Verfahren nach Anspruch 1, **dadurch gekennzeichnet, dass** bei einem Einsatz von Zweiraum-Melkbechern mit Zitzengummis durch das getaktete Steuern der Unterdruckverhältnisse auch während der Stimulationsphase der Öffnungsgrad der Zitzengummis zwischen einem den Milchentzug verhindernden eingefalteten Zustand und einem einen geringen Milchentzug ermöglichenden geöffneten Zustand variiert.

3. Verfahren nach Anspruch 1 oder 2, **dadurch gekennzeichnet, dass** während einer durch einen minimalen vorgegebenen Milchfluss und/oder eine maximale Dauer begrenzten Zeitspanne innerhalb der Hauptmelkphase die Taktzahl zyklisch gegenüber der in der Hauptmelkphase bzw. der Ausmelkphase wirkenden Normaltaktzahl erhöht wird, während die Ratio der in der Hauptmelkphase bzw. der Ausmelkphase üblichen entspricht.

4. Verfahren nach Anspruch 3, **dadurch gekennzeichnet, dass** die Zeitspanne, in welcher die Taktzahl während der Hauptmelkphase zyklisch variiert, auf maximal 180 s begrenzt ist.

5. Verfahren nach einem der Ansprüche 1 bis 4, **dadurch gekennzeichnet, dass** die Zahl der Takte pro Minute in einem 30 bis 45 Sekunden andauernden Zeitabschnitt vor dem Übergang von der Stimulationsphase zur Hauptmelkphase zum überwiegenden Teil drei- bis fünfmal so hoch ist wie in der Hauptmelkphase.

6. Verfahren nach einem der Ansprüche 1 bis 5, **dadurch gekennzeichnet, dass** die Taktzahl in der Stimulationsphase zum überwiegenden Teil zwischen 180 und 350 Takte pro Minute beträgt.

7. Verfahren nach einem der Ansprüche 1 bis 6, **dadurch gekennzeichnet, dass** das zeitliche Verhältnis zwischen Saug- und Entlastungsphase (die Ratio) während der überwiegenden Dauer der Stimulationsphase zwischen 20 : 80 und 30 : 70 beträgt.

8. Verfahren nach einem der Ansprüche 1 bis 7, **dadurch gekennzeichnet, dass** der Übergang von der Stimulationsphase zur Hauptmelkphase sowie die damit verbundene Verringerung der Taktzahl und die Veränderung der Ratio zwischen Saug- und Entlastungsphase zugunsten einer Verlängerung der Saugphase innerhalb von 2 bis 4 Sekunden erfolgen.

9. Verfahren nach einem der Ansprüche 1 bis 8, **dadurch gekennzeichnet, dass** die Taktzahl und die Ratio zwischen Saug- und Entlastungsphase während der Stimulationsphase innerhalb der für sie im Verhältnis zur Hauptmelkphase bzw. zur Ausmelkphase angegebenen Bereiche variiert werden.

10. Verfahren nach einem der Ansprüche 1 bis 9, **dadurch gekennzeichnet, dass** innerhalb einer kurzen Zeitspanne zu Beginn der Stimulationsphase Taktzahl und Ratio etwa den Verhältnissen während der Hauptmelkphase bzw. Ausmelkphase entsprechen.

11. Verfahren nach einem der Ansprüche 1 bis 10, **dadurch gekennzeichnet, dass** das jeweils tatsächlich durchlaufene Verfahrensregime, aber insbesondere die Taktzahl und die Ratio zwischen Saug- und Entlastungsphase oder die Bereiche, innerhalb welcher diese Größen variiert werden, vorzugsweise unter Einbeziehung einer Einheit zur Tiererkennung auf der Grundlage von typischen, das Melkverhalten des erkannten Tieres beschreibenden, in einer Datenbank hinterlegten Parametern festgelegt werden.

## Claims

1. Process for the mechanized milking of animals in which the extraction of the milk occurs during a stimulation phase, followed by a phase of main milking and a draining phase, controlled by a cycle consisting of a suction phase and a discharge phase respectively, while during the suction phase a maximum negative pressure and a minimum negative pressure during the discharge phase act alternately on the teats of the animal to be milked, in which during the predominant duration of the stimulation phase the number of cycles per minute are increased continually or periodically to at least the double of the normal cycle time during the main milking phase and/or the draining phase, and the duration of the suction phase will be limited to maximum a third of the total duration of the cycle

2. Process according to claim 1, **characterized by,** when using a two-chamber milking beaker with rubber teats, due to the cycled control of the negative pressure ratio even during the stimulation phase, the degree of opening of the rubber teats varies between a folded-in condition preventing the milk extraction and an opened condition permitting a limited milk extraction.

3. Process according to claim 1 or 2, **characterized by** that during a predetermined minimum milk flow and/or a time period limited to a maximum duration, the cycle time is increased cyclically in relationship to the standard cycle time within the main milking phase and the draining phase respectively, whereas the ratio corresponds to the one normal during the main milking phase and the draining phase respectively.

4. Process according to claim 3, **characterized by** that the time period within which the cycle number varies cyclically during the main milking phase, is limited to a maximum of 180 seconds.

5. Process according to claims 1 through 4, **characterized by** that the number of cycles per minute in a period of 30 to 45 seconds prior to the transition from the stimulation phase to the main milking phase is mostly three to five times the number as during the main milking phase.

6. Process according to claims 1 through 5, **characterized by** that the cycle number amounts to mostly between 180 and 350 cycles per minute during the stimulation phase.

7. Process according to claims 1 through 6, **characterized by** that the temporal ratio between the suction -and the discharge phase (the ratio) is between 20 : 80 and 30 : 70 during the main duration of the stimulation phase.

8. Process according to claims 1 through 7, **characterized by** that the transition from the stimulation phase to the main milking phase, as well as the corresponding reduction of the cycle number and change of the ratio between suction -and discharge phase in favour of a prolongation of the suction phase occur within 2 to 4 seconds.

9. Process according to claims 1 through 8, **characterized by** that the cycle number and the ratio between the suction -and discharge phase are varied during the stimulation phase in the ranges given for them in ratio to the main milking phase and the draining phase respectively.

10. Process according to claims 1 through 9, **characterized by** that within a short period of time at the onset of the stimulation phase, the cycle number and the ratio are approximately corresponding to the relationships during the main milking phase and the draining phase respectively.

11. Process according to claims 1 through 10, **characterized by** that the respective actually performed procedure, but especially the cycle number and the ratio between suction -and discharge phase or the ranges, in which those numbers can be adjusted, will be established, preferably under consideration of a unit of animal recognition based upon typical parameters stored within a data base and describing the behaviour of the recognized animal during the milking procedure.

## Revendications

1. Procédé pour la traite mécanique de bestiaux, où le prélèvement de lait a lieu pendant une phase de stimulation, une phase de traite principale consécutive et une phase d'égouttage, par action alternée sur le pis d'une bête à traire, commandé par un cycle comprenant une phase de succion et une phase de décharge, d'une dépression maximale pendant la phase de succion et d'une dépression minimale pendant la phase de décharge, le nombre de cycles par minute pendant la plus grande partie de la phase de stimulation étant couramment ou périodiquement porté au moins au double d'un nombre normal de cycles agissant pendant la phase de traite principale et/ou la phase d'égouttage, et la durée de la phase de succion à l'intérieur d'un cycle étant limitée à un tiers au plus de la durée totale du cycle.

2. Procédé selon la revendication 1, **caractérisé en ce qu'**en cas d'actionnement de gobelets complets à deux compartiments avec tétine en caoutchouc par la commande cyclique des rapports de dépression, le degré d'ouverture des tétines en caoutchouc varie aussi pendant la phase de stimulation entre un état replié empêchant le prélèvement de lait et un état ouvert permettant un faible prélèvement de lait.

3. Procédé selon la revendication 1 ou 2, **caractérisé en ce que** pendant un intervalle de temps à l'intérieur de la phase de traite principale, limité par un écoulement de lait minimal prescrit et/ou une durée maximale, le nombre de cycles est cycliquement élevé par rapport au nombre normal de cycles agissant pendant la phase de traite principale et/ou la phase d'égouttage, tandis que le ratio correspond à celui habituel en phase de traite principale et/ou phase d'égouttage.

4. Procédé selon la revendication 3, **caractérisé en ce que** l'intervalle de temps pendant lequel le nombre de cycles varie cycliquement pendant la phase de traite principale est limité à 180 secondes au maximum.

5. Procédé selon l'une des revendications 1 à 4, **caractérisé en ce que** le nombre de cycles par minute dans un segment temporel de 30 à 45 secondes avant la transition de la phase de stimulation à la phase de traite principale est majoritairement de trois à cinq fois plus élevé que dans la phase de traite principale.

6. Procédé selon l'une des revendications 1 à 5, **caractérisé en ce que** le nombre de cycles en phase de stimulation est majoritairement compris entre 180 et 350 cycles par minute.

7. Procédé selon l'une des revendications 1 à 6, **caractérisé en ce que** le rapport de temps entre la phase de succion et la phase de décharge (le ratio) est compris entre 20 : 80 et 30 : 70 pendant la plus grande partie de la phase de stimulation.

8. Procédé selon l'une des revendications 1 à 7, **caractérisé en ce que** la transition de la phase de stimulation à la phase de traite principale ainsi que la diminution correspondante du nombre de cycles et la modification du ratio phase de succion/phase de décharge se déroulent entre 2 et 4 secondes en faveur d'un allongement de la phase de succion.

9. Procédé selon l'une des revendications 1 à 8, **caractérisé en ce que** le nombre de cycles et le ratio phase de succion/phase de décharge sont variables pendant la phase de stimulation dans les étendues qui leur sont attribuées par rapport à la phase de traite principale ou à la phase d'égouttage.

10. Procédé selon l'une des revendications 1 à 9, **caractérisé en ce qu'**à l'intérieur d'un bref intervalle de temps au début de la phase de stimulation, le nombre de cycles et le ration correspondent substantiellement aux rapports pendant la phase de traite principale ou d'égouttage.

11. Procédé selon l'une des revendications 1 à 10, **caractérisé en ce que** les sections de procédé effectivement exécutées, notamment le nombre de cycles et le ratio phase de succion/phase de décharge ou les étendues à l'intérieur desquelles ces grandeurs sont variables, sont préférentiellement fixées par intégration d'une unité de détection de bête sur la base de paramètres typiques décrivant le comportement de traite de la bête détectée, archivés dans une base de données.
